# FASCICULE DE BREVET EUROPEEN

(11) **EP 3 177 830 B1**
(45) Date de publication et mention de la délivrance du brevet: **14.03.2018**
(21) Numéro de dépôt: 16707840.1
(22) Date de dépôt: 27.01.2016
(51) Int. Cl.: F03G 3/00

(54) **MÉCANISME ÉQUILIBRÉ POUR ÉCONOMIE D'ÉNERGIE, MACHINE TOURNANTE ET PROCÉDÉ DE MISE EN OEUVRE**
AUSGEGLICHENER MECHANISMUS ZUR ENERGIEEINSPARUNG, ROTATIONSMASCHINE UND VERFAHREN ZUR IMPLEMENTIERUNG SOLCH EINES MECHANISMUS
BALANCED MECHANISM FOR SAVING ENERGY, ROTATING MACHINE AND METHOD IMPLEMENTING SUCH A MECHANISM

(30) Priorité: 30.12.2015 WO PCT/FR2015/053769
(43) Date de publication de la demande: 14.06.2017
(73) Titulaire: Granger, Maurice, Albufeira 8200-385 (PT)
(72) Inventeur: Granger, Maurice, Albufeira 8200-385 (PT)
(74) Mandataire: Cabinet Laurent & Charras
(86) Numéro de dépôt international: PCT/FR2016/050166
(87) Numéro de publication internationale: WO 2017/064378

(56) Documents cités:
- EP-A1- 1 369 564
- EP-A1- 2 781 790
- WO-A1-2015/163700
- CA-A1- 2 851 867
- FR-A1- 2 811 031

## Description

La présente invention concerne un mécanisme équilibré pour économie d'énergie, dans toute application envisageable, et notamment les machines tournantes. L'invention concerne en particulier un mécanisme à balancier et mouvement elliptique.

L'invention concerne également une machine tournante, par exemple un moteur, un générateur ou un mélangeur, comprenant au moins un tel mécanisme. L'invention concerne en particulier un moteur comprenant plusieurs mécanismes disposés en série et/ou en parallèle.

L'invention concerne enfin un procédé de mise en oeuvre d'un tel mécanisme.

Dans le domaine mécanique, il existe de nombreux mécanismes de transmission mouvement, tels que des trains épicycloïdaux ou des vilebrequins, adaptés pour équiper des machines tournantes. Toutefois, les rendements obtenus avec les mécanismes connus ne sont pas entièrement satisfaisants. EP 2 781 790 A1 est considéré comme le document décrivant l'état de la technique antérieure le plus proche.

Le but de la présente invention est de proposer un mécanisme permettant d'économiser de l'énergie et améliorer le rendement d'une machine tournante.

A cet effet, l'invention a pour objet un mécanisme, comprenant un support ; une première roue dentée mobile en rotation par rapport au support autour d'un premier axe ; une seconde roue dentée mobile en rotation par rapport au support autour d'un second axe ; dans lequel : les axes sont parallèles dans un plan de référence horizontal ou vertical ; et les roues dentées engrènent l'une avec l'autre avec un rapport de transmission unitaire et sont mobiles en rotation dans des sens contraires.

Le mécanisme est caractérisé en ce qu'il comprend un premier élément excentrique solidaire en rotation de la première roue dentée et générant un premier moment de force de pesanteur autour du premier axe ; et un second élément excentrique solidaire en rotation de la seconde roue dentée et générant un second moment de force de pesanteur autour du second axe ; en ce que les moments de force de pesanteur des éléments excentriques ont une même valeur et un même sens, variables selon leur position angulaire autour des axes ; et en ce que pour chaque position angulaire des roues dentées et des éléments excentriques autour des axes, le mécanisme présente une configuration d'équilibre au repos.

Ainsi, l'invention permet de réduire l'énergie nécessaire pour entraîner les roues dentées en rotation, grâce à l'équilibrage des éléments excentriques et aux forces centrifuges qu'ils génèrent. L'invention permet même de produire de l'énergie au sein d'une machine tournante, en associant plusieurs mécanismes synchronisés. Le mécanisme permet donc d'économiser de l'énergie, comme développé dans la description ci-après.

Selon d'autres caractéristiques avantageuses du mécanisme selon l'invention, prises isolément ou en combinaison :
- Les éléments excentriques ont une même masse et des mêmes dimensions.
- Les roues dentées comprennent une première roue ayant une dent plus longue que les autres dents et une deuxième roue ayant une rainure formée entre deux dents, et la dent plus longue et la rainure coïncident lors de l'engrènement des roues dentées, pour permettre l'alignement des éléments excentriques.
- Les axes des roues dentées sont horizontaux.
- Le plan de référence est horizontal.
- Le plan de référence est vertical.

De manière préférée, le support comprend un socle et un balancier qui est suspendu au socle et qui supporte les axes des roues dentées. Les axes sont mobiles avec le balancier. Les éléments excentriques décrivent un mouvement elliptique.

Selon un premier mode de réalisation, le balancier est suspendu au socle par des bielles articulées. Ce mode de réalisation est avantageux lorsque le plan de référence incluant les axes des roues dentées est horizontal.

De préférence, le mécanisme comprend un arbre de transmission ayant un axe aligné avec les articulations supérieures des bielles articulées. On définit une première distance entre l'extrémité distale de chaque élément excentrique et l'axe de rotation correspondant. On définit une deuxième distance égale à l'entraxe des bielles articulées. La première distance est inférieure à la deuxième distance, de sorte que les éléments excentriques passent sous l'arbre de transmission.

Selon un deuxième mode de réalisation, le balancier est suspendu directement au socle. Ce mode de réalisation est avantageux lorsque le plan de référence incluant les axes des roues dentées est vertical.

De préférence, le mécanisme comprend un arbre de transmission ayant un axe aligné avec l'articulation supérieure du balancier. On définit une première distance entre l'extrémité distale de chaque élément excentrique et l'axe de rotation correspondant. On définit une deuxième distance égale à l'entraxe des bielles articulées. La première distance est inférieure à la deuxième distance, de sorte que les éléments excentriques passent sous l'arbre de transmission.

L'invention concerne également une machine tournante, comprenant au moins un mécanisme tel que mentionné ci-dessus.

De préférence, la machine tournante est une machine à production ou transformation d'énergie, présentant un rendement amélioré. Avantageusement, cette machine est dépourvue de vilebrequin.

A titre d'exemples non limitatifs, la machine tournante peut être un moteur, un générateur, un mélangeur, une centrifugeuse, un compresseur, une pompe ou une turbine.

Lorsque la machine est un moteur à combustion interne, les éléments excentriques équipant le mécanisme se rencontrent en deux positions de centrifugation maximale, correspondant chacune à une combustion de gaz dans le moteur.

Selon un mode de réalisation préféré, la machine comprend au moins un mécanisme à balancier, dans lequel les éléments excentriques décrivent un mouvement elliptique.

Selon un mode de réalisation avantageux, la machine comprend au moins une paire de mécanismes à balancier disposés en série et synchronisés. Les mécanismes sont alignés et mobiles en opposition de phase.

Chaque mécanisme comprend son propre arbre de transmission. Lorsque le balancier est suspendu au socle par des bielles articulées, l'arbre de transmission a un axe aligné avec les articulations supérieures des bielles articulées. Lorsque le balancier est suspendu directement au socle, l'arbre de transmission a un axe aligné avec l'articulation supérieure du balancier.

De manière avantageuse, la machine comprend une bielle de liaison accouplée aux mécanismes disposés en série. La bielle de liaison est immobile suivant une direction horizontale et mobile suivant une direction verticale au cours du mouvement des mécanismes.

Selon un autre mode de réalisation avantageux, la machine comprend plusieurs mécanismes à balancier disposés en parallèle et synchronisés. De préférence, le nombre de mécanismes disposés en parallèle est pair, ce qui facilite leur synchronisation.

La machine comprend un unique arbre de transmission couplé aux différents mécanismes disposés en parallèle selon une rangée.

Selon un autre mode de réalisation avantageux, la machine comprend plusieurs paires de mécanismes à balancier. Les paires sont disposées en parallèle et synchronisées entre elles. Au sein de chaque paire, les mécanismes sont disposés en série et synchronisés.

La machine comprend deux arbres de transmission, chacun couplé aux différents mécanismes disposés en parallèle selon une rangée.

Selon un autre mode de réalisation avantageux, la machine est un moteur à deux temps comprenant deux mécanismes à balancier. Les deux premiers éléments excentriques sont disposés en décalage d'un demi-tour, et les deux seconds éléments excentriques sont disposés en décalage d'un demi-tour.

Selon un autre mode de réalisation avantageux, la machine est un moteur à quatre temps comprenant quatre mécanismes à balancier. Les quatre premiers éléments excentriques sont disposés en décalage par quarts de tour, et de même les quatre seconds éléments excentriques sont disposés en décalage par quarts de tour.

De préférence, lorsque la machine comprend plusieurs mécanismes à balancier, le socle est commun à tous les balanciers. Autrement dit, tous les balanciers sont suspendus au même socle.

De préférence également, la machine comprend des moyens de démarrage du ou des mécanismes, incluant par exemple une chaine ou un système d'engrenages, prévus pour entrainer en rotation l'une des roues dentées.

En outre, les moyens de démarrage peuvent comprendre un moteur pour démarrage assisté ou une manivelle pour démarrage manuel du mécanisme.

Selon un mode de réalisation particulier, la machine est dépourvue de moyens de démarrage dédiés du ou des mécanismes à balancier. Dans ce cas, le démarrage du ou des mécanismes peut être réalisé par simple poussée sur le ou les balanciers ou sur l'un des éléments excentriques.

Avantageusement, la machine comprend des moyens de récupération d'énergie lorsque le mécanisme est en mouvement, par exemple sous forme d'une génératrice. Dans ce cas, la machine comprend de préférence des moyens de démarrage du mécanisme, incluant un moteur. Cela permet de vaincre la résistance au démarrage lié à la présence de la génératrice.

L'invention a également pour objet un procédé de mise en oeuvre d'un mécanisme tel que décrit ci-dessus, comprenant les étapes successives suivantes :
- une étape de positionnement des éléments excentriques l'un par rapport à l'autre et par rapport aux roues dentées, de sorte que les moments de force de pesanteur des éléments excentriques ont une même valeur et un même sens, variables selon leur position angulaire autour des axes, et que pour chaque position angulaire des roues dentées et des éléments excentriques autour des axes, le mécanisme présente une configuration d'équilibre au repos ;
- une étape de démarrage de la rotation des roues dentées et des éléments excentriques autour des axes, dans laquelle le mécanisme quitte la configuration d'équilibre et se met en mouvement ; et
- une étape de fonctionnement, dans laquelle la rotation des éléments excentriques autour des axes génère des forces centrifuges au sein du mécanisme.

L'invention sera mieux comprise à la lecture de la description qui va suivre, donnée uniquement à titre d'exemple non limitatif et faite en référence aux dessins annexés sur lesquels :
- la figure 1 est une vue de côté d'un mécanisme conforme à un premier mode de réalisation de l'invention, comprend un support à balancier, deux roues dentées et deux éléments excentriques ;
- la figure 2 est une vue partielle de dessus, à plus grande échelle, du balancier équipant le mécanisme de la figure 1 ;
- les figures 3 à 10 sont des représentations schématiques du mécanisme de la figure 1, illustrant les mouvements des roues dentées et des éléments excentriques ;
- les figures 11 à 14 sont des représentations schématiques analogues aux figures 3 à 6, pour un mécanisme conforme à un deuxième mode de réalisation de l'invention ;
- la figure 15 est une vue analogue à la figure 2, montrant un exemple de machine conforme à l'invention, équipée de quatre mécanismes à balancier en parallèle ;
- la figure 16 est une vue complémentaire de la figure 15, montrant l'arbre commun aux différents mécanismes ;
- la figure 17 est une vue analogue à la figure 15, montrant un autre exemple de machine conforme à l'invention, équipée de deux mécanismes à balancier en parallèle ; et
- la figure 18 est une vue de détail partielle de l'engrènement entre les deux roues dentées du mécanisme, dans un mode de réalisation particulier de l'invention ;
- la figure 19 est une vue analogue à la figure 1, montrant un autre exemple de machine conforme à l'invention, équipée de deux mécanismes à balancier en série ;
- la figure 20 est une vue analogue à la figure 2, montrant la machine de la figure 19;
- la figure 21 est une vue de côté de la bielle de liaison équipant la machine des figures 19 et 20 ;
- les figures 22 et 23 sont des vues analogues respectivement aux figures 20 et 21, dans une autre configuration de la machine ;
- la figure 24 est une vue à plus grande échelle d'une extrémité de la bielle des figures 21 et 23, montrant différentes positions au cours du fonctionnement de la machine ;
- la figure 25 est une vue analogue à la figure 19, montrant un autre exemple de machine conforme à l'invention, équipée de deux mécanismes à balancier en série ; et
- la figure 26 est une vue de dessus montrant une variante d'accouplement entre la bielle de liaison et le mécanisme.

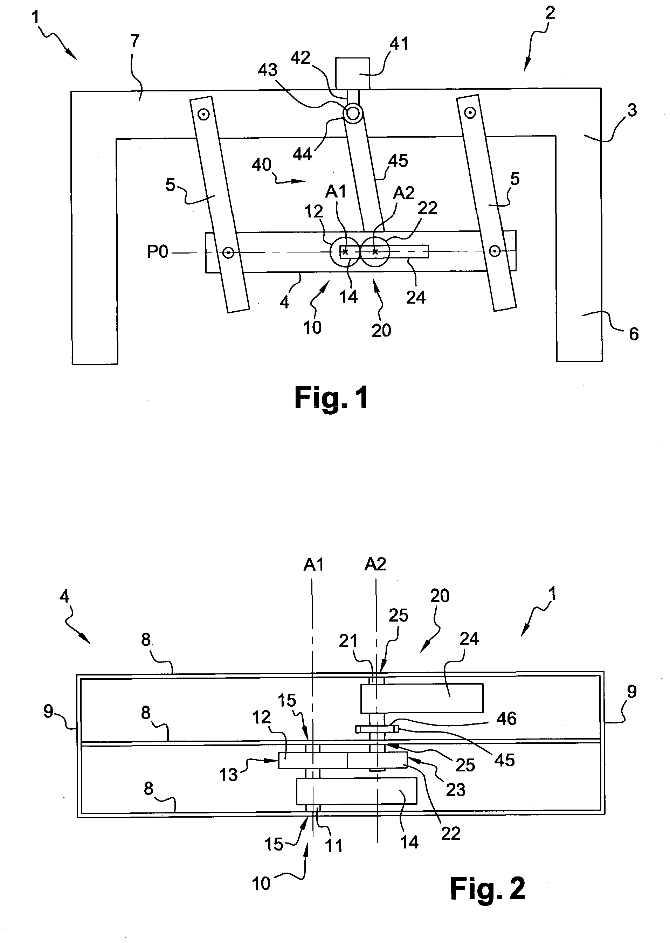

Sur les figures 1 à 10 est représenté un mécanisme 1 équilibré pour économie d'énergie, conforme à un premier mode de réalisation de l'invention.

Le mécanisme 1 comprend un support 2, un premier ensemble 10 mobile en rotation R1 autour d'un premier axe A1, un second ensemble 20 mobile en rotation R2 autour d'un second axe A2, et un dispositif 40 de démarrage du mécanisme 1. Les axes A1 et A2 sont parallèles entre eux, horizontaux et disposés dans un plan de référence P0 qui est horizontal. Les ensembles 10 et 20 sont contrarotatifs.

Le support 2 comprend un socle fixe 3 et un balancier mobile 4, qui est positionné horizontalement et suspendu au socle 3 par quatre bielles d'angle 5. Chaque bielle 5 est articulée à la fois sur le socle 3 et sur le balancier 4, par des liaisons pivots d'axes parallèles aux axes A1 et A2. Le balancier 4 est mobile en translation circulaire par rapport au support 3.

Le support 2 comprend deux pieds verticaux 6 et un montant horizontal 7. Les bielles 5 sont articulées sur le montant 7.

Le balancier 4 comprend trois plaques longitudinales 8 et des barres transversales 9 fixées aux extrémités des plaques longitudinales 8. Les bielles 5 sont articulées sur les plaques 8 extérieures. Les plaques 8 du balancier 4 supportent les ensembles 10 et 20. Plus précisément, l'ensemble 10 est supporté par la plaque 8 intermédiaire et la plaque 8 avant via les paliers 15, l'ensemble 20 est supporté par la plaque 8 intermédiaire et la plaque 8 arrière via les paliers 25. Les axes A1 et A2 sont fixes par rapport au balancier 4.

L'ensemble 10 comprend un arbre 11, une roue dentée 12 munie de dents 13, un bras 14 et des paliers 15. L'arbre 11, la roue 12 et les paliers 15 sont centrés sur l'axe A1, tandis que le bras 14 constitue un élément excentrique, ayant un centre de gravité G1 excentré d'une distance d1 par rapport à l'axe A1. La roue 12 et le bras 14 sont montés sur l'arbre 11, qui est supporté par les paliers 15 montés dans les plaques 8 du balancier 4. La roue 12 est mobile en rotation R1 par rapport au balancier 4 autour de l'axe A1.

Le bras 14 est solidaire en rotation R1 de la roue 12 et génère un moment M1 de force de pesanteur P1 autour de l'axe A1. La force P1 est sensiblement constante. Par contre, le moment M1 a une valeur et un sens (horaires ou antihoraire) qui sont variables en fonction de la position angulaire du bras 12 autour de l'axe A1.

L'ensemble 20 comprend un arbre 21, une roue dentée 22 munie de dents 23, un bras 24 et des paliers 25. L'arbre 21, la roue 22 et les paliers 25 sont centrés sur l'axe A2, tandis que le bras 24 constitue un élément excentrique, ayant un centre de gravité G2 excentré d'une distance d2 par rapport à l'axe A2. La roue 22 et le bras 24 sont montés sur l'arbre 21, qui est supporté par les paliers 25 montés dans les plaques 8 du balancier 4. La roue 22 est mobile en rotation R2 par rapport au balancier 4 autour de l'axe A2.

Le bras 24 est solidaire en rotation R2 de la roue 14 et génère un moment M2 de force de pesanteur P2 autour de l'axe A2. La force P2 est sensiblement constante. Par contre, le moment M2 a une valeur et un sens (horaires ou antihoraire) qui sont variables en fonction de la position angulaire du bras 22 autour de l'axe A2.

Les roues 12 et 22 engrènent l'une avec l'autre avec un rapport de transmission unitaire. Les roues 12 et 22 ont les mêmes dimensions et le même nombre de dents 13 et 23. Les roues 12 et 22 sont mobiles en rotation R1 et R2 dans des sens contraires. Autrement dit, les roues 12 et 22 sont contrarotatives.

Dans le cadre de l'invention, les bras 14 et 24 sont positionnés avec précision l'un par rapport à l'autre et par rapport aux roues 12 et 14, de sorte que les moments M1 et M2 aient toujours la même valeur et le même sens (horaire ou antihoraire), quelles que soit les positions angulaires respectives des bras 14 et 24 autour des axes A1 et A2.

La masse et les dimensions des bras 14 et 24 sont déterminées avec précision, car elles influencent la position des centres de gravité G1 et G2, et donc la valeur des moments M1 et M2. La masse de chaque bras 14 et 24 est proportionnelle à ses dimensions, à masse volumique constante. De préférence, les bras 14 et 24 ont la même masse et les mêmes dimensions. En alternative, les bras 14 et 24 peuvent avoir des masses et dimensions différentes, tant que les moments M1 et M2 ont la même valeur et le même sens (horaire ou antihoraire) quelles que soit leurs positions angulaires respectives.

Le dispositif 40 de démarrage du mécanisme 1 est conçu pour initier la rotation R1 et R2 des ensembles 10 et 20, depuis un état d'équilibre du mécanisme 1. Le dispositif 40 peut présenter toute configuration adaptée à l'application visée.

Sur l'exemple des figures 1 et 2, le dispositif 40 comprend un moteur 41, une courroie 42, un arbre de transmission 43, une roue dentée 44, une chaine crantée 45 et une roue dentée 46. Le moteur 41 est disposé sur le montant 7 du socle 3. L'arbre 43 est supporté à ses extrémités par le socle 3 et mobile en rotation autour d'un axe A3, qui est aligné verticalement avec les articulations supérieures des bielles 5. L'axe A3 est disposé horizontalement, parallèle aux axes A1 et A2. La courroie 42 relie le moteur 41 à l'arbre 43. La roue 44 est montée solidaire en rotation de l'arbre 43, tandis que la roue 46 est montée solidaire en rotation de l'arbre 21. En alternative, la roue 46 peut être montée solidaire en rotation de l'arbre 11. La chaine 45 relie les roues 44 et 46, dont l'entraxe est égal à l'entraxe des bielles 5. Selon une autre alternative, les roues dentées 44 et 46 ainsi que la chaine 45 peuvent être remplacées par un système de cardans, ou tout autre système de transmission de mouvement adapté à l'application visée. Ainsi, le démarrage du moteur 41 permet d'entraîner les ensembles 10 et 20 en rotation R1 et R2.

En pratique, le mouvement du mécanisme 1 permet de récupérer de l'énergie au niveau de l'arbre 43, par exemple en couplant cet arbre 43 à une génératrice. L'arbre 43 constitue ainsi un arbre de récupération d'énergie.

En alternative, pour démarrer le mécanisme 1, l'arbre 43 peut être entraîné directement par une manivelle.

Selon une autre alternative, le mécanisme 1 peut être dépourvu de dispositif de moteur 41 et courroie 42 constituant des moyens de démarrage. Dans ce cas, le démarrage du mécanisme 1 peut être réalisé en exerçant une simple poussée sur un côté du balancier 4, ou sur l'un des bras 14 et 24. L'énergie nécessaire pour lancer le mécanisme 1 est très faible. De préférence, le mécanisme 1 comporte tout de même les éléments 43, 44, 45 et 46. L'arbre 43 peut être couplé à une génératrice pour récupérer de l'énergie.

Pour permettre le fonctionnement correct du mécanisme 1, la distance entre l'extrémité distale de chaque bras 14 et 24 et son axe de rotation A1 ou A2 est inférieure à l'entraxe entre articulations des bielles 5, de sorte que les bras 14 et 24 puissent passer sous l'arbre de transmission 43.

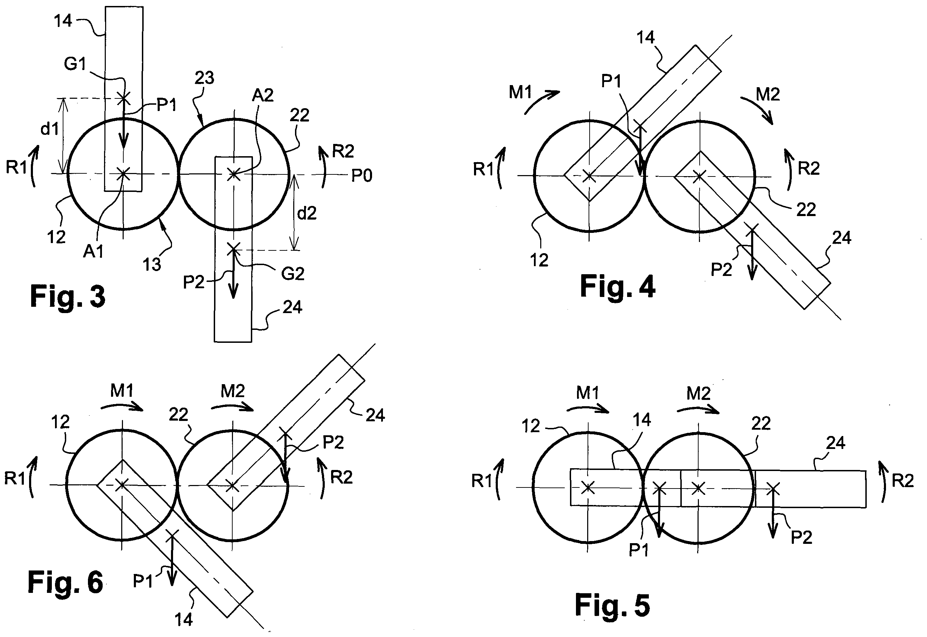

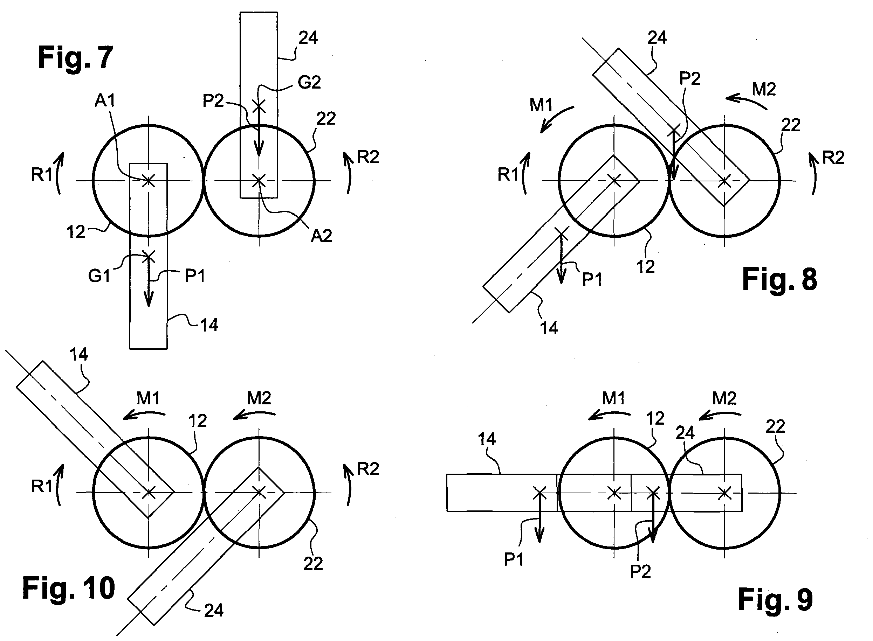

Les figures 3 à 10 illustrent le fonctionnement du mécanisme 1 sur un tour. En particulier, les figures 3 à 6 illustrent un demi-tour pendant lequel les bras 14 et 24 sont mobiles du côté droit du balancier 4, tandis que les figures 7 à 10 illustrent un demi-tour pendant lequel les bras 14 et 24 sont mobiles du côté gauche du balancier 4.

La figure 3 montre le bras 14 positionné vers le haut et le bras 24 positionné vers le bas. Le mécanisme 1 est à l'équilibre. Les roues 12 et 22 sont immobiles. Les moments M1 et M2 sont nuls.

A ce stade, le dispositif 40 permet de démarrer le mouvement du mécanisme 1, avec engrènement des roues 12 et 22, de sorte que les bras 14 et 24 vont être déplacés tous les deux vers la droite. Le basculement du bras 14 aide la roue 12 à tourner dans le sens de rotation R1, ce qui permet d'entraîner la roue 22 dans le sens de rotation R2, et ainsi de relever le bras 24.

La figure 4 montre les bras 14 et 24 ayant chacun effectué un huitième de tour du côté droit. La figure 5 montre les bras 14 et 24 ayant chacun effectué un quart de tour du côté droit. La figure 6 montre les bras 14 et 24 ayant chacun effectué trois quarts de tour du côté droit. A chaque instant, les moments M1 et M2 ont la même valeur et le même sens (horaire). Sous l'action des bras 14 et 24, le balancier 4 est entraîné du côté droit.

La figure 7 montre les bras 14 et 24 ayant chacun effectué un demi-tour par rapport à leur position initiale de la figure 3. Le bras 14 est positionné vers le bas, tandis que le bras 24 positionné vers le haut. Les moments M1 et M2 sont nuls. Les roues 12 et 22 sont en mouvement, de sorte que les bras 14 et 24 vont être déplacés tous les deux vers la droite. Le basculement du bras 24 aide la roue 22 à tourner dans le sens de rotation R2, ce qui permet d'aider la roue 22 à tourner ans le sens de rotation R1, et ainsi relever le bras 14.

La figure 8 montre les bras 14 et 24 ayant chacun effectué un huitième de tour du côté gauche. La figure 9 montre les bras 14 et 24 ayant chacun effectué un quart de tour du côté gauche. La figure 10 montre les bras 14 et 24 ayant chacun effectué trois quarts de tour du côté gauche. A chaque instant, les moments M1 et M2 ont la même valeur et le même sens (antihoraire). Sous l'action des bras 14 et 24, le balancier 4 est entraîné du côté gauche.

Au fur et à mesure que les ensembles 10 et 20 pivotent autour des axes A1 et A2, les bras 14 et 24 sont donc situés tantôt du côté droit, tantôt du côté gauche. En pratique, la rotation R1 et R2 des bras 14 et 24 génère des forces centrifuges au sein du mécanisme 1. Le balancier 4 se déplace tantôt du côté droit, tantôt du côté gauche. Par conséquent, les bras 14 et 24 décrivent un mouvement elliptique au lieu d'un mouvement circulaire.

Le mécanisme 1 suit un mouvement oscillatoire en deux temps. Les forces centrifuges sont maximales lorsque les bras 14 et 24 se croisent, sur les figures 5 et 9. Chaque temps correspond à un demi-tour (180°) des bras 14 et 24, entre leurs positions de centrifugation maximale.

Au vu des explications ci-dessus, il est remarquable que pour chaque position angulaire des roues dentées 12 et 22 et des bras 14 et 24 autour des axes A1 et A2, le mécanisme 1 présente une configuration d'équilibre au repos. Autrement dit, en considérant le mécanisme 1 à l'arrêt dans n'importe quelle position angulaire des ensembles 10 et 20, alors le mécanisme 1 se trouve dans une configuration de repos. Le mécanisme 1 est équilibré, ce qui réduit fortement l'énergie nécessaire pour faire tourner les ensembles 10 et 20.

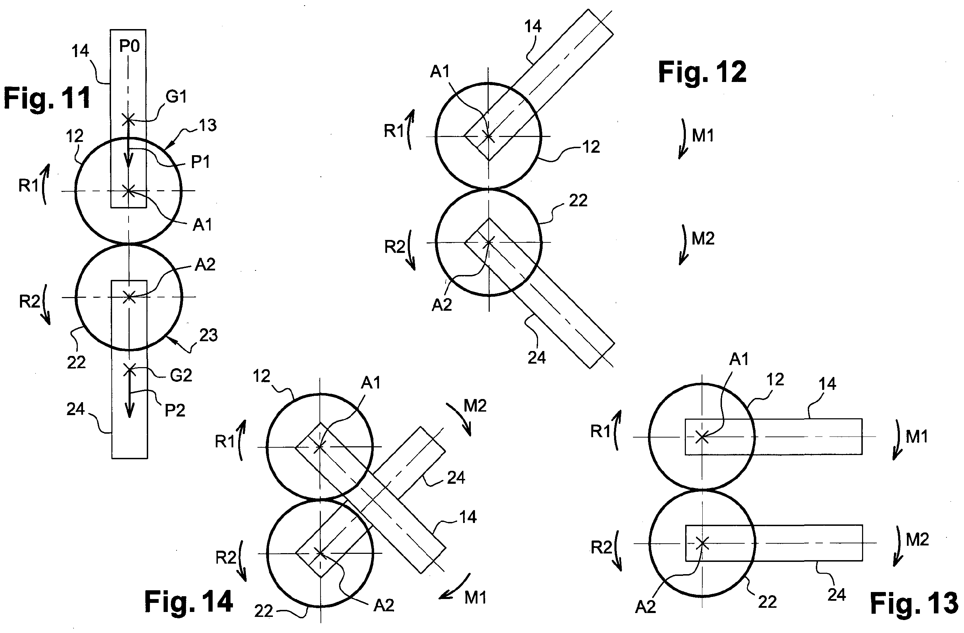

Les figures 11 à 14 illustrent le fonctionnement d'un mécanisme 1 conforme à un second mode de réalisation. Les axes A1 et A2 sont parallèles entre eux et horizontaux. En revanche, les axes A1 et A2 sont disposés dans un plan de référence P0 qui est vertical.

Dans ce mode de réalisation également, les bras 14 et 24 sont positionnés avec précision l'un par rapport à l'autre et par rapport aux roues 12 et 14, de sorte que les moments M1 et M2 aient toujours la même valeur et le même sens (horaire ou antihoraire), quelles que soit les positions angulaires respectives des bras 14 et 24 autour des axes A1 et A2.

Seul le positionnement des bras 14 et 24 du côté droit est illustré aux figures 11 à 14, tandis que le positionnement des bras 14 et 24 du côté gauche n'est pas illustré, dans un but de simplification.

En pratique, un seul mécanisme 1 n'est pas suffisant pour constituer un moteur, du fait de l'énergie perdue. Cependant, il est possible de fabriquer un moteur en associant plusieurs mécanismes 1 synchronisés, comme détaillé ci-après.

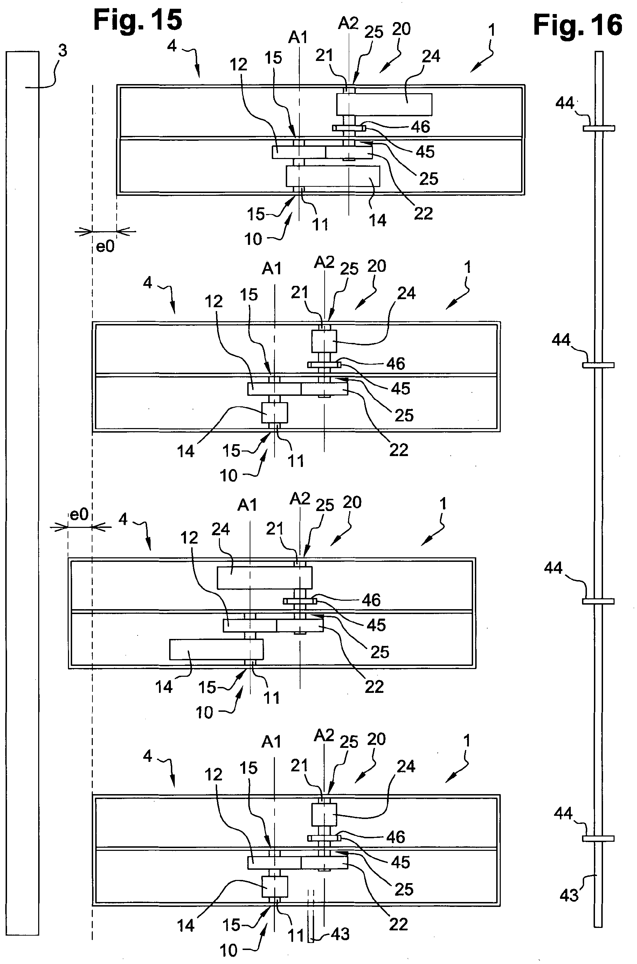

Les figures 15 et 16 illustrent un exemple de machine rotative conforme à l'invention, du type moteur à quatre temps. Le moteur comprend quatre mécanismes 1 selon l'invention, chacun muni de son propre balancier 4. Les mécanismes 1 et leurs balanciers 4 sont disposés en parallèles les uns des autres, c'est-à-dire côte à côte.

Le socle 3 est commun à tous les mécanismes 1. Autrement dit, le socle 3 supporte chacun des balanciers 4, suspendus en parallèle les uns des autres. Le socle 3 n'est que partiellement représenté, sur le côté de la figure 15, dans un but de simplification.

De même, l'arbre de transmission 43 est commun à tous les mécanismes 1. Ainsi, le mouvement des différents mécanismes 1 permet de récupérer de l'énergie au niveau de l'arbre 43, par exemple en couplant cet arbre 43 à une génératrice. L'arbre 43 constitue ainsi un arbre de récupération d'énergie. L'arbre 43 n'est que partiellement représenté en bas de la figure 15 dans un but de simplification, et entièrement représenté avec ses quatre roues dentées 45 à la figure 16.

En pratique, les quatre bras 14 sont disposés en décalage d'un quart de tour les uns par rapport aux autres. De même, les quatre bras 24 sont disposés en décalage d'un quart de tour les uns par rapport aux autres. Ainsi, le moteur a toujours le même nombre de bras 14 ou 24 du côté gauche ou du côté droit, ce qui améliore son rendement. Chaque temps correspond à une rotation d'un quart de tour (90°) des mécanismes 1.

Lorsque deux mécanismes 1 sont simultanément aux points morts (moments M1 et M2 nuls), les deux autres mécanismes 1 sont en positions de centrifugation maximale, respectivement du côté gauche et du côté droit, avec un écart e0 de chaque côté. L'énergie générée est maximale dans ces positions de centrifugation maximale, ou positions de poussée. Comme les quatre mécanismes 1 ne sont jamais au point mort en même temps, le moteur lui-même n'a pas de point mort. Avantageusement, chaque position de poussée correspond à une combustion de gaz dans le moteur.

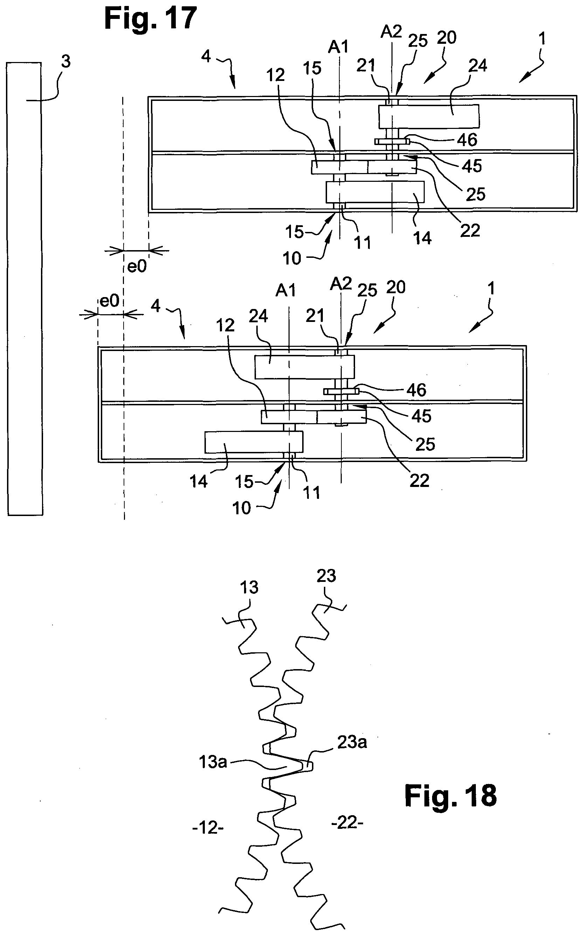

La figure 17 illustre un autre exemple de machine rotative conforme à l'invention, du type moteur à deux temps, selon une variante de la figure 15. Dans ce cas le moteur comprend deux mécanismes 1, chacun muni de son propre balancier 4.

Comme indiqué pour la figure 15, le socle 3 est commun à tous les mécanismes 1 et supporte chacun des balanciers 4, suspendus en parallèle les uns des autres. De même, l'arbre de transmission 43 est commun à tous les mécanismes 1, de sorte que le mouvement des deux mécanismes 1 permet de récupérer de l'énergie au niveau de l'arbre 43. Dans un but de simplification, le socle 3 et l'arbre 43 ne sont que partiellement représentés à la figure 17.

Dans cette forme de réalisation, les deux bras 14 sont disposés en décalage d'un demi-tour les uns par rapport aux autres. De même, les deux bras 24 sont disposés en décalage d'un demi-tour les uns par rapport aux autres. Comme indiqué précédemment le moteur a toujours le même nombre de bras 14 ou 24 du côté gauche ou du côté droit, ce qui améliore son rendement. Chaque temps correspond à une rotation d'un demi-tour (180°) des mécanismes 1.

Au cours d'un tour à 360°, les deux mécanismes 1 sont simultanément aux points morts (moments M1 et M2 nuls), et simultanément en positions de poussée, correspondant chacune à une combustion de gaz dans le moteur.

Selon une autre variante non représentée, la machine tournante comprend huit mécanismes 1 à balanciers 4 disposés en parallèle. Au cours d'un tour, la machine produit une poussée chaque huitième de tour (45°) des mécanismes 1.

D'autres variantes peuvent être mises en oeuvre sans sortir du cadre de l'invention. Les dimensions des éléments constitutifs de la machine, par exemple le socle 3 et l'arbre de transmission 43, varient en fonction du nombre de mécanismes 1.

Pour obtenir les meilleurs résultats et rendement, il est important que chaque balancier 4 soit positionné dans un plan rigoureusement horizontal. Il en est de même pour les axes A1 et A2 des roues dentées 12 et 22, qui doivent être situés dans un plan P0 rigoureusement horizontal ou vertical, selon la configuration du mécanisme 1.

La figure 18 représente un mode de réalisation particulier et préféré de l'invention, dans lequel la roue 12 a une dent 13a plus longue que les autres dents 13, tandis que la roue 22 a une rainure 23a formée entre deux dents 23. La dent 13a et la rainure 23a de positionnement peuvent présenter différentes formes sans sortir du cadre de l'invention.

En pratique, la dent 13a et la rainure 23a coïncident lors de l'engrènement des roues dentées 12 et 22, ce qui permet l'alignement des éléments excentriques 14 et 24, et donc l'équilibrage précis du mécanisme 1.

Par exemple, les roues dentées 12 et 22 et les éléments excentriques 14 et 24 peuvent être munis de trous de fixation disposés en vis-à-vis, non représentés sur les différentes figures dans un but de simplification. Ainsi, la dent 13a et la rainure 23a facilitent l'alignement de ces trous de fixation.

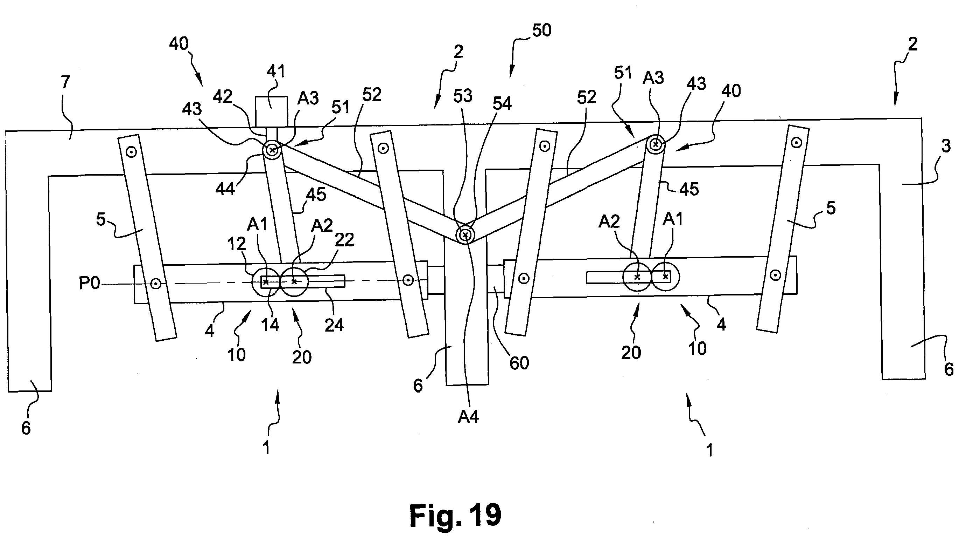

Les figures 19 à 24 illustrent un autre exemple de machine rotative conforme à l'invention, du type moteur à deux temps, selon une variante de la figure 17. Le moteur comprend deux mécanismes 1 selon l'invention, chacun muni de son propre balancier 4. Les mécanismes 1 et leurs balanciers 4 sont disposés en série les uns des autres, c'est-à-dire alignés dans le prolongement l'un de l'autre.

Le socle 3 est commun aux deux mécanismes 1. Autrement dit, le socle 3 supporte chacun des balanciers 4, suspendus en série les uns des autres.

Chaque mécanisme comprend son propre arbre de transmission 43, ayant un axe aligné A3 avec les articulations supérieures des bielles 5 articulées. En revanche, un seul moteur 41 est nécessaire pour le démarrage des mécanismes 1. En alternative, le moteur 41 peut être remplacé par une manivelle, ou la machine peut être dépourvue de moyens de démarrage des mécanismes 1.

La machine comprend un dispositif 50 intermédiaire entre les dispositifs 40 des deux mécanismes 1. Ce dispositif 50 peut être utilisé pour la transmission de mouvement entre les deux dispositifs 40, ainsi que pour la récupération d'énergie. Sur l'exemple de la figure 19, le dispositif 50 comprend deux roues dentées 51, deux chaines crantées 52, un arbre 53 et une roue dentée 54. L'arbre 53 est mobile en rotation autour d'un axe A4, qui est disposé horizontalement, parallèle aux axes A1, A2 et A3. L'arbre 53 est supporté à ses extrémités par le socle 3, par exemple par deux pieds 6 du socle 3. En alternative, l'arbre 53 peut être supporté par le montant 7, de sorte que son axe A4 est aligné avec les axes A3 des mécanismes 1. Les roues 51 sont montées solidaires en rotation des arbres 43 des deux mécanismes 1, tandis que la roue 54 est montée solidaire en rotation de l'arbre 53. Les chaines 52 relient les roues 51 et la roue 54. Ainsi, le mouvement des différents mécanismes 1 permet de récupérer de l'énergie au niveau de l'arbre 53, par exemple en couplant cet arbre 53 à une génératrice. L'arbre 53 constitue alors un arbre de récupération d'énergie.

La machine comprend également une bielle de liaison 60 couplée avec les deux mécanismes 1, assurant ainsi leur synchronisation et une importante réduction des vibrations. La bielle 60 comprend un corps 61 central reliant deux têtes 62 situées à ses extrémités longitudinales. Chaque tête 61 comprend une partie annulaire 63 dans laquelle est logé un roulement 64. En alternative, cette partie annulaire 63 peut comporter tout type de palier adapté à l'application visée. Chaque roulement 64 comprend une bague externe 65, une bague interne 66 et une rangée de billes 67. Dans la bague interne 66 est logé un manchon 68, comportant un orifice excentrique 69 de réception de l'arbre 21 du mécanisme 1. Le manchon 68 est solidaire de l'arbre 21 et mobile en rotation dans le roulement 64. Ainsi, l'arbre 21 de chaque mécanisme 1 est mobile en rotation dans l'une des têtes 61 de la bielle 60.

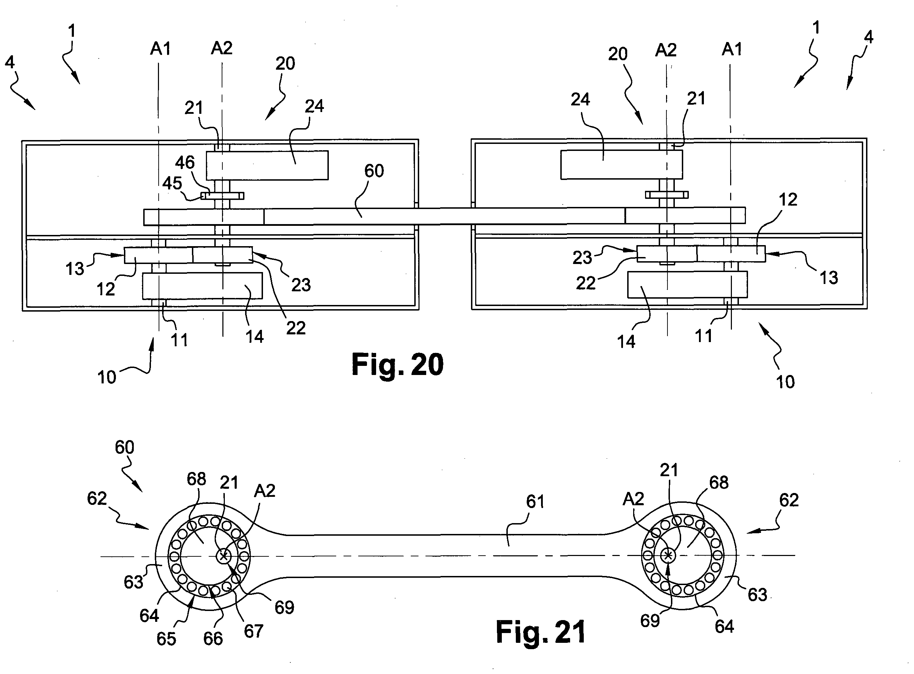

Sur les figures 20 et 21, les mécanismes 1 sont rapprochés. Les éléments 14 et 24 sont orientés vers le centre de la machine. Les arbres 21 couplés à la bielle 60 sont rapprochés.

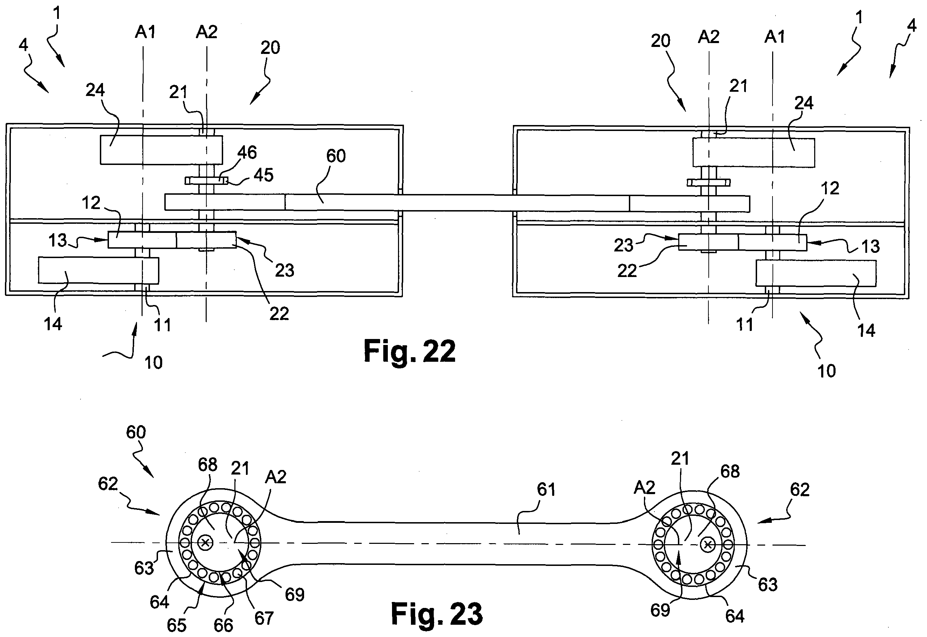

Sur les figures 22 et 23, les mécanismes 1 sont éloignés. Les éléments 14 et 24 sont orientés vers les côtés de la machine. Les arbres 21 couplés à la bielle 60 sont éloignés.

Au cours du mouvement des mécanismes 1 et plus particulièrement de leurs ensembles 10 et 20, la bielle 60 est immobile horizontalement et mobile verticalement. Bien que la bielle 60 soit théoriquement libre de se déplacer dans l'espace, elle n'est pas animée d'un mouvement horizontal du fait de son positionnement à l'équilibre entre les deux mécanismes 1. La bielle 60 est réalisée en matériau(x) présentant un bon compromis entre résistance et souplesse, en raison des importantes sollicitations auxquelles la bielle 60 est soumise.

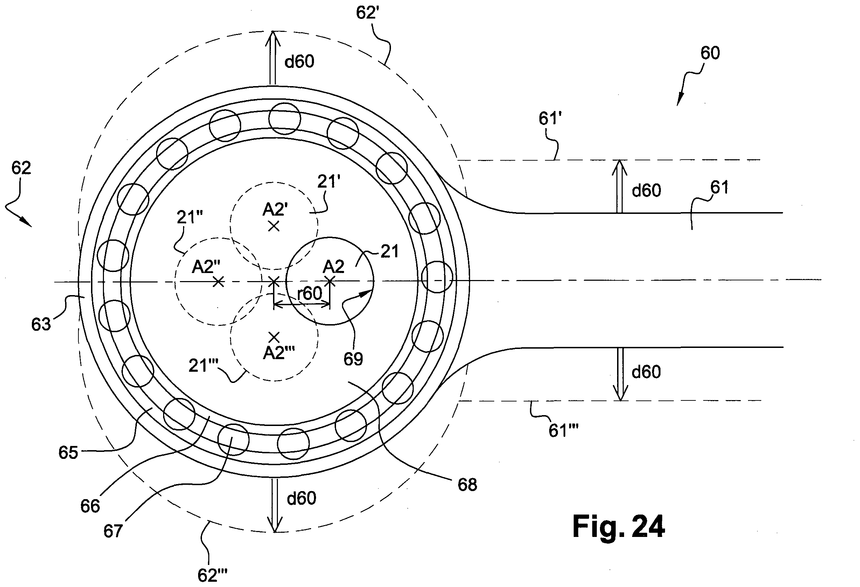

Sur la figure 24, la bielle 60 est partiellement représentée dans différentes positions au cours du fonctionnement de la machine. Plus particulièrement, la figure 24 montre la tête 62 gauche de la bielle 60, couplée au mécanisme 1 de gauche sur les figures 19 à 23. Les éléments 21, A2, 61 et 62 montré en position droite sont référencés 21', A2', 61' et 62' en position haute, 21", A2", 61 et 62 en position gauche, et 21''', A2''', 61''' et 62''' en position basse. On définit un axe A0 central de la tête 62, du roulement 64 et du manchon 68. Cet axe A0 constitue l'axe de rotation de l'axe A2 au cours du mouvement du mécanisme 1. On définit également un rayon r60 constant entre les axes A0 et A2. On définit enfin un débattement d60 vertical de la bielle 60 vers le haut et vers le bas. Le débattement d60 est égal au rayon r60.A titre d'exemples non limitatifs, le diamètre de l'arbre 21 est égal à 30 millimètres, le diamètre extérieur de la bague externe 65 est égal à 140 millimètres, le diamètre intérieur de la bague interne 66 est égal à 110 millimètres, et le rayon r60 est égal à 20 millimètres. Ainsi, le débattement d60 vertical de la bielle 60 est égal à 20 millimètres vers le haut et 20 millimètres vers le bas.

Les deux bras 14 sont disposés en décalage d'un demi-tour les uns par rapport aux autres. De même, les deux bras 24 sont disposés en décalage d'un demi-tour les uns par rapport aux autres. Le moteur a toujours le même nombre de bras 14 ou 24 du côté gauche ou du côté droit. Chaque temps correspond à une rotation d'un demi-tour (180°) des mécanismes 1.

Au cours d'un tour à 360°, les deux mécanismes 1 sont simultanément aux points morts (moments M1 et M2 nuls), et simultanément en positions de poussée, correspondant chacune à une combustion de gaz dans le moteur.

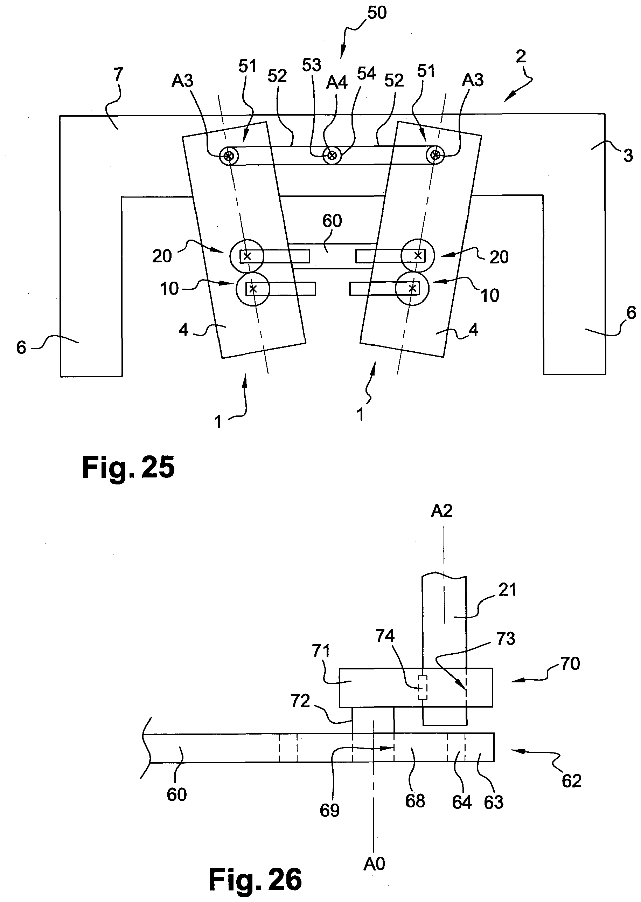

La figure 25 illustre un autre exemple de machine rotative conforme à l'invention, du type moteur à deux temps, selon une variante de la figure 19. Le moteur comprend deux mécanismes 1 selon l'invention, chacun muni de son propre balancier 4. Les balanciers 4 sont suspendus directement au socle 3 et disposés en série. Au cours du mouvement des mécanismes 1 et plus particulièrement de leurs ensembles 10 et 20, la bielle 60 est immobile horizontalement et mobile verticalement.

La figure 26 illustre un autre mode de liaison de la bielle 60 au mécanisme 1. L'orifice 69 est formé au centre du manchon 68 et centré sur l'axe A0. Une pièce excentrique 70 est interposée entre l'arbre 21 et la bielle 60. La pièce 70 comprend un corps 71 allongé et un maneton 72 cylindrique solidaire du corps 71. Un orifice 73 est formé dans le corps 71. L'arbre 21 est disposé dans l'orifice 73 et solidarisé au corps 71, par exemple à l'aide d'une clavette 74 ou par tout autre moyen. L'arbre 21 et l'orifice 73 sont centrés sur l'axe A2. Le maneton 72 est disposé dans l'orifice 69 du manchon 68, centré sur l'axe A0. Cet axe A0 constitue l'axe de rotation de l'axe A2 au cours du mouvement du mécanisme 1.

Selon une autre variante non représentée, la machine tournante comprend quatre mécanismes 1 à balanciers 4, disposés à la fois en parallèle et en série. Deux paires de mécanismes 1 sont disposées en parallèle et synchronisées entre elles. Au sein de chaque paire, deux mécanismes sont disposés en série et synchronisés entre eux. Au cours d'un tour, la machine produit une poussée chaque quart de tour (90°) des mécanismes 1.

Selon une autre variante non représentée, la machine tournante comprend huit mécanismes 1 à balanciers 4, disposés à la fois en parallèle et en série. Au cours d'un tour, la machine produit une poussée chaque huitième de tour (45°) des mécanismes 1.

Sur les figures 1 à 26, certains déplacements et distances sont exagérés dans un but de simplification, comme par exemple le débattement latéral des balanciers 4.

En pratique, le mécanisme 1 et la machine peuvent être conformés différemment des figures 1 à 26 sans sortir du cadre de l'invention.

Par exemple, le système de transmission par chaînes et roues dentées peut être remplacé par un système de cardans, ou tout autre système de transmission de mouvement adapté à l'application visée.

En outre, les caractéristiques techniques des différents modes de réalisation et variantes mentionnés ci-dessus peuvent être, en totalité ou pour certaines d'entre elles, combinées entre elles. Ainsi, le mécanisme 1 et la machine peuvent être adaptés en termes de coût, de fonctionnalités et de performance.

## Revendications

1. Mécanisme (1), comprenant :
- un support (2) ;
- une première roue dentée (12) mobile en rotation (R1) par rapport au support (2) autour d'un premier axe (A1) ;
- une seconde roue dentée (22) mobile en rotation (R2) par rapport au support (2) autour d'un second axe (A2) ;
dans lequel :
- les axes (A1 ; A2) sont parallèles dans un plan de référence (P0) horizontal ou vertical ; et
- les roues dentées (12 ; 22) engrènent l'une avec l'autre avec un rapport de transmission unitaire et sont mobiles en rotation (R1 ; R2) dans des sens contraires ;
le mécanisme (1) étant **caractérisé en ce qu'**il comprend :
- un premier élément excentrique (14) solidaire en rotation (R1) de la première roue dentée (12) et générant un premier moment (M1) de force de pesanteur (P1) autour du premier axe (A1) ; et
- un second élément excentrique (24) solidaire en rotation (R2) de la seconde roue dentée (22) et générant un second moment (M2) de force de pesanteur (P2) autour du second axe (A2) ;
**en ce que** les moments (M1 ; M2) de force de pesanteur (P1 ; P2) des éléments excentriques (14 ; 24) ont une même valeur et un même sens, variables selon leur position angulaire autour des axes (A1 ; A2) ;
et **en ce que** pour chaque position angulaire des roues dentées (12 ; 22) et des éléments excentriques (14; 24) autour des axes (A1 ; A2), le mécanisme (1) présente une configuration d'équilibre au repos.

2. Mécanisme (1) selon l'une des revendications précédentes, **caractérisé en ce que** les éléments excentriques (14 ; 24) ont une même masse et des mêmes dimensions.

3. Mécanisme (1) selon l'une des revendications précédentes, **caractérisé en ce que** les roues dentées (12 ; 22) comprennent une première roue (12) ayant une dent (13a) plus longue que les autres dents (13) et une deuxième roue (22) ayant une rainure (23a) formée entre deux dents (23), et **en ce que** la dent (13a) plus longue et la rainure (23a) coïncident lors de l'engrènement des roues dentées (12 ; 22), pour permettre l'alignement des éléments excentriques (14, 24).

4. Mécanisme (1) selon l'une des revendications 1 à 3, **caractérisé en ce que** les axes (A1 ; A2) des roues dentées (12 ; 22) sont horizontaux, et le plan de référence (P0) est horizontal.

5. Mécanisme (1) selon l'une des revendications 1 à 3, **caractérisé en ce que** les axes (A1 ; A2) des roues dentées (12 ; 22) sont horizontaux, et le plan de référence (P0) est vertical.

6. Mécanisme (1) selon l'une des revendications 1 à 5, **caractérisé en ce que** le support (2) comprend un socle (3) et un balancier (4) qui est suspendu au socle (3) et qui supporte les axes (A1 ; A2) des roues dentées (12 ; 22), **en ce que** les axes (A1 ; A2) sont mobiles avec le balancier (4), et **en ce que** les éléments excentriques (14 ; 24) décrivent un mouvement elliptique.

7. Machine tournante, **caractérisée en ce que** la machine comprend au moins un mécanisme (1) selon l'une des revendications 1 à 6.

8. Machine tournante selon la revendication 7, **caractérisée en ce que** la machine est un moteur à combustion interne, et **en ce que** les éléments excentriques (14 ; 24) équipant le mécanisme (1) se rencontrent en deux positions de centrifugation maximale, correspondant chacune à une combustion de gaz dans le moteur.

9. Machine tournante selon l'une des revendications 7 ou 8, **caractérisée en ce que** la machine comprend au moins un mécanisme (1) à balancier (4) selon la revendication 6, dans lequel les éléments excentriques (14 ; 24) décrivent un mouvement elliptique.

10. Machine tournante selon la revendication 9, **caractérisée en ce que** la machine comprend au moins une paire de mécanismes (1) à balancier (4) disposés en série et synchronisés.

11. Machine tournante selon la revendication 10, **caractérisée en ce que** la machine comprend une bielle de liaison (60) accouplée aux mécanismes (1) disposés en série, la bielle de liaison (60) étant immobile suivant une direction horizontale et mobile suivant une direction verticale au cours du mouvement des mécanismes (1).

12. Machine tournante selon la revendication 9, **caractérisée en ce que** la machine comprend au moins deux mécanismes (1) à balancier (4) disposés en parallèle et synchronisés.

13. Machine tournante selon la revendication 9, **caractérisée en ce que** la machine comprend plusieurs paires de mécanismes (1) à balancier (4), les mécanismes (1) étant disposés en série et synchronisés au sein de chaque paire, les paires étant disposées en parallèle et synchronisées entre elles.

14. Machine tournante selon l'une des revendications 10 à 12, **caractérisée en ce que** la machine est un moteur à deux temps comprenant deux mécanismes (1) à balanciers, **en ce que** les deux premiers éléments excentriques (14) sont disposés en décalage d'un demi-tour, et **en ce que** les deux seconds éléments excentriques (24) sont disposés en décalage d'un demi-tour.

15. Machine tournante selon l'une des revendications 10 à 13, **caractérisée en ce que** la machine est un moteur à quatre temps comprenant quatre mécanismes (1) à balanciers (4), **en ce que** les quatre premiers éléments excentriques (14) sont disposés en décalage par quarts de tour, et **en ce que** les quatre seconds éléments excentriques (24) sont disposés en décalage par quarts de tour.

16. Machine tournante selon l'une des revendications 7 à 15, **caractérisée en ce que** le socle (3) est commun à tous les balanciers (4).

17. Machine tournante selon l'une des revendications 7 à 16, **caractérisée en ce que** la machine comprend des moyens de démarrage (40) du ou des mécanismes (1), incluant par exemple une chaine ou un système d'engrenages, prévus pour entrainer en rotation (R1 ; R2) l'une des roues dentées (12 ; 22).

18. Machine tournante selon la revendication 17, **caractérisé en ce que** les moyens de démarrage (40) comprennent un moteur (41).

19. Machine tournante selon la revendication 17, **caractérisé en ce que** les moyens de démarrage (40) comprennent une manivelle.

20. Machine tournante selon l'une des revendications 9 à 16, **caractérisée en ce que** la machine est dépourvue de moyens de démarrage dédiés du ou des mécanismes (1), et **en ce que** le démarrage du ou des mécanismes (1) peut être réalisé par simple poussée sur le ou les balanciers (4) ou sur l'un des éléments excentriques (14 ; 24).

21. Machine tournante selon l'une des revendications 7 à 20, **caractérisée en ce que** la machine comprend des moyens de récupération d'énergie lorsque le mécanisme (1) est en mouvement, par exemple sous forme d'une génératrice.

22. Procédé de mise en oeuvre d'un mécanisme (1) selon l'une des revendications 1 à 6, **caractérisé en ce qu'**il comprend les étapes successives suivantes :
- une étape de positionnement des éléments excentriques (14 ; 24) l'un par rapport à l'autre et par rapport aux roues dentées (12 ; 22), de sorte que les moments (M1 ; M2) de force de pesanteur (P1 ; P2) des éléments excentriques (14 ; 24) ont une même valeur et un même sens, variables selon leur position angulaire autour des axes (A1 ; A2), et que pour chaque position angulaire des roues dentées (12 ; 22) et des éléments excentriques (14 ; 24) autour des axes (A1 ; A2), le mécanisme (1) présente une configuration d'équilibre au repos ;
- une étape de démarrage de la rotation (R1 ; R2) des roues dentées (12 ; 22) et des éléments excentriques (14 ; 24) autour des axes (A1 ; A2), dans laquelle le mécanisme (1) quitte la configuration d'équilibre et se met en mouvement ; et
- une étape de fonctionnement, dans laquelle la rotation (R1 ; R2) des éléments excentriques (14 ; 24) autour des axes (A1 ; A2) génère des forces centrifuges au sein du mécanisme (1).

## Patentansprüche

1. Mechanismus (1), umfassend:
- einen Träger (2),
- ein erstes Zahnrad (12), das gegenüber dem Träger (2) eine Drehbewegung (R1) um ein erste Achse (A1) ausführen kann;
- ein zweites Zahnrad (22), das gegenüber dem Träger (2) eine Drehbewegung (R2) um ein zweite Achse (A2) ausführen kann;
wobei:
- die Achsen (A1; A2) parallel in einer horizontalen oder vertikalen Bezugsebene (P0) verlaufen; und
- die Zahnräder (12; 22) mit einem einheitlichen Übersetzungsverhältnis ineinandergreifen, wobei sie gegenläufige Drehbewegungen (R1; R2) ausführen können;
wobei der Mechanismus (1) **dadurch gekennzeichnet ist, dass** er Folgendes umfasst:
- ein erstes Exzenterelement (14), das drehfest (R1) mit dem ersten Zahnrad (12) verbunden ist und ein erstes schwerkraftbedingtes (P1) Moment (M1) um die erste Achse (A1) erzeugt; und
- ein zweites Exzenterelement (24), das drehfest (R2) mit dem zweiten Zahnrad (22) verbunden ist und ein zweites schwerkraftbedingtes (P2) Moment (M2) um die zweite Achse (A2) erzeugt;
dadurch, dass die schwerkraftbedingten (P1; P2) Momente (M1; M2) der Exzenterelemente (14; 24) den gleichen Wert und die gleiche Richtung haben, welche sich entsprechend ihrer Winkelstellung um die Achsen (A1, A2) verändern;
und dadurch, dass der Mechanismus (1) für jede Winkelstellung der Zahnräder (12; 22) und der Exzenterelemente (14; 24) um die Achsen (A1; A2) eine Ruhekonfiguration im Gleichgewicht aufweist.

2. Mechanismus (1) nach einem der vorhergehenden Ansprüche, **dadurch gekennzeichnet, dass** die Exzenterelemente (14; 24) die gleiche Masse und die gleichen Abmessungen haben.

3. Mechanismus (1) nach einem der vorhergehenden Ansprüche, **dadurch gekennzeichnet, dass** die Zahnräder (12; 22) ein erstes Rad (12), bei welchem ein Zahn (13a) länger als die anderen Zähne (13) ist, und ein zweites Rad (22) umfassen, bei welchem eine Lücke (23a) zwischen zwei Zähnen (23) gebildet ist, und dadurch, dass sich der Zahn (13a) und die Lücke (23a) beim Ineinandergreifen der Zahnräder (12; 22) auf derselben Höhe befinden, sodass die Exzenterelemente (14, 24) aufeinander ausgerichtet werden können.

4. Mechanismus (1) nach einem der Ansprüche 1 bis 3, **dadurch gekennzeichnet, dass** die Achsen (A1; A2) der Zahnräder (12; 22) horizontal sind und die Bezugsebene (P0) horizontal ist.

5. Mechanismus (1) nach einem der Ansprüche 1 bis 3, **dadurch gekennzeichnet, dass** die Achsen (A1; A2) der Zahnräder (12; 22) horizontal sind und die Bezugsebene (P0) vertikal ist.

6. Mechanismus (1) nach einem der Ansprüche 1 bis 5, **dadurch gekennzeichnet, dass** der Träger (2) einen Sockel (3) und ein Pendel (4) umfasst, welches am Sockel (3) aufgehängt ist und den Achsen (A1; A2) der Zahnräder (12; 22) als Lager dient, dadurch, dass die Achsen (A1; A2) sich mit dem Pendel (4) bewegen können, und dadurch, dass die Exzenterelemente (14; 24) eine elliptische Bewegung beschreiben.

7. Umlaufende Maschine, **dadurch gekennzeichnet, dass** die Maschine mindestens einen Mechanismus (1) nach einem der Ansprüche 1 bis 6 umfasst.

8. Umlaufende Maschine nach Anspruch 7, **dadurch gekennzeichnet, dass** es sich bei der Maschine um eine Brennkraftmaschine handelt, und dadurch, dass die Exzenterelemente (14; 24), mit denen der Mechanismus (1) versehen ist, sich an zwei Positionen der größtmöglichen Entfernung vom Mittelpunkt treffen, welche jeweils einer Gasverbrennung in dem Motor entsprechen.

9. Umlaufende Maschine nach einem der Ansprüche 7 oder 8, **dadurch gekennzeichnet, dass** die Maschine mindestens einen Mechanismus (1) mit Pendel (4) nach Anspruch 6 umfasst, in welchem die Exzenterelemente (14; 24) eine elliptische Bewegung beschreiben.

10. Umlaufende Maschine nach Anspruch 9, **dadurch gekennzeichnet, dass** die Maschine mindestens ein Paar von Mechanismen (1) mit Pendel 4) umfasst, die in Reihe angeordnet und synchronisiert sind.

11. Umlaufende Maschine nach Anspruch 10, **dadurch gekennzeichnet, dass** die Maschine eine Verbindungsstange (60) umfasst, die an die in Reihe angeordneten Mechanismen (1) gekuppelt ist, wobei die Verbindungsstange (60) im Bewegungsablauf der Mechanismen (1) in einer horizontalen Richtung unbeweglich und in einer vertikalen Richtung beweglich ist.

12. Umlaufende Maschine nach Anspruch 9, **dadurch gekennzeichnet, dass** die Maschine mindestens zwei Mechanismen (1) mit Pendel 4) umfasst, die parallel angeordnet und synchronisiert sind.

13. Umlaufende Maschine nach Anspruch 9, **dadurch gekennzeichnet, dass** die Maschine mehrere Paare von Mechanismen (1) mit Pendel (4) umfasst, wobei die Mechanismen (1) innerhalb jedes der Paare in Reihe angeordnet und synchronisiert sind, wobei die Paare parallel zueinander angeordnet und synchronisiert sind.

14. Umlaufende Maschine nach einem der Ansprüche 10 bis 12, **dadurch gekennzeichnet, dass** es sich bei der Maschine um einen Zweitaktmotor handelt, der zwei Mechanismen (1) mit Pendeln umfasst, dadurch, dass die beiden ersten Exzenterelemente (14) um einen halben Umlauf versetzt angeordnet sind, und dadurch, dass die beiden zweiten Exzenterelemente (24) um einen halben Umlauf versetzt angeordnet sind.

15. Umlaufende Maschine nach einem der Ansprüche 10 bis 13, **dadurch gekennzeichnet, dass** es sich bei der Maschine um einen Viertaktmotor handelt, der vier Mechanismen (1) mit Pendeln (4) umfasst, dadurch, dass die vier ersten Exzenterelemente (14) um jeweils um einen Viertelumlauf versetzt angeordnet sind, und dadurch, dass die vier zweiten Exzenterelemente (24) um jeweils einen Viertelumlauf versetzt angeordnet sind.

16. Umlaufende Maschine nach einem der Ansprüche 7 bis 15, **dadurch gekennzeichnet, dass** der Sockel (3) sämtlichen Pendeln (4) gemein ist.

17. Umlaufende Maschine nach einem der Ansprüche 7 bis 16, **dadurch gekennzeichnet, dass** die Maschine Mittel (40) zum Starten des oder der Mechanismen (1) umfasst, wobei dazu beispielsweise eine Kette oder ein Getriebesystem gehören und sie dafür vorgesehen sind, eines der Zahnräder (12; 22) in eine Drehbewegung (R1; R2) zu versetzen.

18. Umlaufende Maschine nach Anspruch 17, **dadurch gekennzeichnet, dass** die Startmittel (40) einen Motor (41) umfassen.

19. Umlaufende Maschine nach Anspruch 17, **dadurch gekennzeichnet, dass** die Startmittel (40) eine Drehkurbel umfassen.

20. Umlaufende Maschine nach einem der Ansprüche 9 bis 16, **dadurch gekennzeichnet, dass** die Maschine über keinerlei Mittel verfügt, die zum Starten des oder der Mechanismen (1) bestimmt sind, und dadurch, dass das Starten des oder der Mechanismen (1) durch Ausüben eines einfachen Drucks auf das oder die Pendel (4) oder auf eines der Exzenterelemente (14; 24) erfolgen kann.

21. Umlaufende Maschine nach einem der Ansprüche 7 bis 20, **dadurch gekennzeichnet, dass** die Maschine Mittel umfasst, mit welchen Energie zurückgewonnen werden kann, wenn sich der Mechanismus (1) bewegt, beispielsweise in Form eines Stromerzeugers.

22. Verfahren zum Einsatz eines Mechanismus (1) nach einem der Ansprüche 1 bis 6, **dadurch gekennzeichnet, dass** es nacheinander die folgenden Schritte umfasst:
- einen Schritt, in welchem die Exzenterelemente (14; 24) zueinander und gegenüber den Zahnrädern (12; 22) derart angeordnet werden, dass die schwerkraftbedingten (P1; P2) Momente (M1; M2) der Exzenterelemente (14; 24) den gleichen Wert und die gleiche Richtung haben, welche sich entsprechend ihrer Winkelstellung um die Achsen (A1; A2) verändern, und dass der Mechanismus (1) für jede Winkelstellung der Zahnräder (12; 22) und der Exzenterelemente (14; 24) um die Achsen (A1; A2) eine Ruhekonfiguration im Gleichgewicht aufweist;
- einen Schritt, in welchem die Drehbewegung (R1; R2) der Zahnräder (12; 22) und der Exzenterelemente (14; 24) um die Achsen (A1; A2) gestartet wird, wobei der Mechanismus (1) die Konfiguration im Gleichgewicht verlässt und sich in Bewegung setzt; und
- einen Betriebsschritt, in welchem die Drehbewegung (R1; R2) der Exzenterelemente (14; 24) um die Achsen (A1; A2) innerhalb des Mechanismus (1) Zentrifugalkräfte erzeugt.

## Claims

1. Mechanism (1), comprising:
- a support (2);
- a first cog wheel (12) mobile in rotation (R1) in relation to the support (2) around a first axis (A1);
- a second cog wheel (22) mobile in rotation (R2) in relation to the support (2) around a second axis (A2);
wherein:
- the axes (A1; A2) are parallel within a horizontal or vertical reference plane (P0); and
- the cog wheels (12; 22) engage one with the other using a unitary transmission ratio and are mobile in rotation (R1; R2) in opposing directions;
the mechanism being **characterised in that** it comprises:
- a first eccentric element (14) integral with the first cog wheel (12) in rotation (R1) and generating a first moment (M1) of gravity force (P1) around the first axis (A1); and
- a second eccentric element (24) integral with the second cog wheel (22) in rotation (R2) and generating a second moment (M2) of gravity force (P2) around the second axis (A2);
**in that** the moments (M1; M2) of gravity force (P1; P2) of the eccentric elements (14; 24) have a same value and a same direction, both being variable depending on their angular position around the axes (A1; A2);
and **in that** for each angular position of the cog wheels (12; 22) and of the eccentric elements (14; 24) around the axes (A1; A2), the mechanism (1) presents an equilibrium configuration at rest.

2. The mechanism (1) according to one of the previous claims, **characterised in that** the eccentric elements (14; 24) have a same mass and same dimensions.

3. The mechanism (1) according to one of the previous claims, **characterised in that** the cog wheels (12; 22) comprise a first wheel (12) having a cog (13a) longer than the other cogs (13) and a second wheel (22) having a groove (23a) formed between two cogs (23), and **in that** the longer cog (13a) and the groove (23a) coincide when the cog wheels (12; 22) engage, thereby enabling alignment of the eccentric elements (14, 24).

4. The mechanism (1) according to one of the claims 1 to 3, **characterised in that** the axes (A1; A2) of the cog wheels (12; 22) are horizontal, and the reference plane (P0) is horizontal.

5. The mechanism (1) according to one of the claims 1 to 3, **characterised in that** the axes (A1; A2) of the cog wheels (12; 22) are horizontal, and the reference plane (P0) is vertical.

6. The mechanism according to one of the claims 1 to 5, **characterised in that** the support (2) comprises a base (3) and a pendulum (4) which is suspended on the base and which supports the axes (A1; A2) of the cog wheels (12; 22), **in that** the axes (A1, A2) are movable with the pendulum (4), and **in that** the eccentric elements (14; 24) follow an elliptical motion.

7. A rotary machine, **characterised in that** the machine comprises at least one mechanism (1) according to anyone of claims 1 to 6.

8. The rotary machine according to claim 7, **characterised in that** the machine is an internal combustion engine, and **in that** the eccentric elements (14; 24) equipping the mechanism (1) join up in two maximal centrifugation positions, each one corresponding to a combustion of gas inside the engine.

9. The rotary machine according to claim 7 or 8, **characterised in that** the machine comprises at least one mechanism (1) with a pendulum (4) according to claim 6, wherein the eccentric elements (14; 24) follow an elliptical movement.

10. The rotary machine according to claim 9, **characterised in that** the machine comprises at least one pair of mechanisms (1) with a pendulum (4) placed in series and synchronised.

11. The rotary machine according to claim 10, **characterised in that** the machine comprises a connecting link rod (60) coupled to the mechanisms (1) arranged in series, the connecting link rod (60) being stationary in a horizontal direction and movable in a vertical direction during the movement of the mechanisms (1).

12. The rotary machine according to claim 9, **characterised in that** the machine comprises at least two mechanisms (1) with a pendulum (4) placed in parallel and synchronised.

13. The rotary machine according to claim 9, **characterised in that** the machine comprises several pairs of mechanisms (1) with a pendulum (4), the mechanisms (1) being placed in series and synchronised within each pair, the pairs being placed in parallel and synchronized among themselves.

14. The rotary machine according to one of claims 10 to 12, **characterised in that** the machine is a two-stroke engine comprising two mechanisms (1) with pendulums, **in that** the first two eccentric elements (14) are placed at half-turn intervals, and **in that** the second two eccentric elements (24) are placed at half-turn intervals.

15. The rotary machine according to one of claims 10 to 13, **characterised in that** the machine is a four-stroke engine comprising four mechanisms (1) with a pendulum (4), **in that** the first four eccentric elements (14) are placed at quarter-turn intervals, and **in that** the second four eccentric elements (24) are placed at quarter-turn intervals.

16. The rotating machine according to one of the claims 7 to 15, **characterised in that** the base (3) is common to all the pendulums (4).

17. The rotating machine according to one of the claims 7 to 16, **characterised in that** it comprises start-up means (40) for the mechanism or mechanisms (1), including for example a chain or a gearing system, designed to drive one of the cog wheels (12; 22) into rotation (R1; R2).

18. The rotary machine according to claim 17, **characterised in that** the start-up means (40) comprise a motor (41).

19. The rotary machine according to claim 17, **characterised in that** the start-up means (40) comprise a crank.

20. The rotary machine according to one of the claims 9 to 16, **characterised in that** the machine is devoid of dedicated start-up means for the mechanism or mechanisms (1), and **in that** the start-up of the mechanism or mechanisms (1) is doable by a simple push on the pendulum or pendulums (4) or on one of the eccentric elements (14; 24).

21. The rotary machine according to one of the claims 7 to 20, **characterised in that** it comprises energy-collection means while the mechanism is in motion, for example in the form of a generator.

22. An implementation method of a mechanism (1) according to one of the claims 1 to 6, **characterised in that** it comprises the following successive steps:
- a positioning step of the eccentric elements (14; 24) one in relation to the other and in relation to the cog wheels (12; 22), in order that the moments (M1; M2) of gravity force (P1; P2) of the eccentric elements (14; 24) have a same value and a same direction, both being variable according to their angular position around the axes (A1; A2), and that for each angular position of the cog wheels (12; 22) and of the eccentric elements (14; 24) around the axes (A1; A2), the mechanism (1) presents an equilibrium configuration at rest;
- a rotation (R1; R2) start-up step of the cog wheels (12; 22) and of the eccentric elements (14; 24) around the axes (A1; A2), wherein the mechanism (1) quits the equilibrium configuration and sets in motion; and
- an operating step, wherein the rotation (R1; R2) of the eccentric elements (14; 24) around the axes (A1; A2) generates centrifugal force within the mechanism (1).
